# EUROPEAN PATENT APPLICATION

(11) **EP 4 063 631 A2**
(43) Date of publication of application: **28.09.2022**
(21) Application number: 22158352.9
(22) Date of filing: 23.02.2022
(51) Int. Cl.: F02C 7/22, F02C 7/224

(54) **TURBINE ENGINE SYSTEM EQUIPPED WITH A FUEL DEOXYGENATION SYSTEM AND TURBOELECTRIC POWER SYSTEM**

(30) Priority: 24.03.2021 US 202117211111
(71) Applicant: General Electric Company, Schenectady, NY 12345 (US)
(72) Inventor: HON, Robert Charles, Cincinnati, 45215 (US); NIERGARTH, Daniel Alan, Cincinnati, 45215 (US)
(74) Representative: Openshaw & Co.

(57) **Abstract**

Turbine engine systems (200) equipped with a fuel deoxygenation system (240) and turboelectric power system (220) are provided. In one aspect, a turbine engine system (200) includes a turboelectric power system (220) having an electric generator (224) operatively coupled with a gas turbine engine (220). A fuel line (230) provides fuel to the gas turbine engine (220). A fuel deoxygenation system (240) is positioned along the fuel line (230) for reducing an amount of oxygen in the fuel. A main fuel pump (254) is positioned downstream of the fuel deoxygenation system (240) along the fuel line (230). An electric motor (252) drives the main fuel pump (254). An electric generator (224) of a turboelectric power system (220) is operatively coupled with the gas turbine engine (210) and generates electrical power. The electrical power is provided to the electric motor (252) and the fuel deoxygenation system (240). Heat is recovered from the turboelectric power system (220) and the electric motor (252) and is imparted to fuel provided to the gas turbine engine (210).

## Description

### FIELD

The present subject matter relates generally to a turbine engine system equipped with a fuel deoxygenation system and turboelectric power system.

### BACKGROUND

Typical aircraft propulsion systems include one or more gas turbine engines. Such gas turbine engines generally include a turbomachine or core engine. A core engine typically includes, in serial flow order, a compressor section, a combustion section, a turbine section, and an exhaust section. In operation, air is provided to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

Some aircraft propulsion systems can be hybrid-electric propulsion systems that include turboelectric power generation systems. Such systems can include an electric generator operatively coupled with the gas turbine engine. The electric generator can generate electrical power. However, the turboelectric system can generate substantial heat during operation. Fuel has been determined to be an efficient heat sink to receive at least some of such heat during operations due at least in part to its heat capacity and an increased efficiency in combustion operations that may result from combusting higher temperature fuel. However, heating the fuel up without properly conditioning the fuel may cause the fuel to "coke," or form solid particles that may clog up certain components of the fuel system, such as the fuel nozzles. Reducing an amount of oxygen in the fuel may effectively reduce the likelihood that the fuel will coke beyond an unacceptable amount. Accordingly, fuel deoxygenation systems can be provided to reduce the oxygen in the fuel. However, components of such fuel deoxygenation systems can require substantial electrical power (for pumping and heaters) and the packaging volume and mass of such components adds weight to the aircraft to which the gas turbine engine is mounted. Conventionally, there is no cooperation between turboelectric power generation systems and fuel deoxygenation systems, which has resulted in system inefficiencies and undesirable consequences.

Accordingly, engine systems that address one or more of the challenges noted above would be useful.

### BRIEF DESCRIPTION

Aspects of the present disclosure are directed to distributed control systems and methods of controlling turbomachines. Aspects and advantages of the invention will be set forth in part in the following description, or may be obvious from the description, or may be learned through practice of the invention.

In one aspect, an engine system is provided. The engine system includes a turboelectric power system having a gas turbine engine and one or more electric components. At least one of the one or more electric components is operable to generate electrical power. The engine system also includes a fuel line for providing a fuel to the gas turbine engine. Further, the engine system includes a fuel conditioning system positioned along the fuel line and operable to condition the fuel. The fuel conditioning system is operable to receive electrical power from the turboelectric power system. In addition, the engine system includes a main fuel pump operable to move the fuel along the fuel line. Further, the engine system includes a heat exchanger positioned along the fuel line. Also, the engine system includes a heat recovery loop along which a working fluid is movable, the heat recovery loop positioned at least in part in a heat exchange relationship with the one or more electric components of the turboelectric power system such that the one or more electric components impart thermal energy to the working fluid moving along the heat recovery loop, the heat recovery loop also positioned at least in part in a heat exchange relationship with the fuel line at the heat exchanger such that the working fluid imparts thermal energy to the fuel moving along the fuel line.

In another aspect, an engine system is provided. The engine system includes a turboelectric power system having a gas turbine engine and one or more electric components including an electric generator operatively coupled with the gas turbine engine. The electric generator is operable to generate electrical power. The engine system also includes a fuel line for providing a fuel to the gas turbine engine. Further, the engine system includes a fuel deoxygenation system positioned along the fuel line and operable to reduce an amount of oxygen in the fuel. The fuel deoxygenation system is operable to receive electrical power from the turboelectric power system. Further, the engine system includes a main fuel pump positioned downstream of the fuel deoxygenation system along the fuel line. The main fuel pump is operable to move the fuel along the fuel line. The engine system also includes a heat exchanger positioned along the fuel line. Furthermore, the engine system includes a heat recovery loop along which a working fluid is movable, the heat recovery loop positioned at least in part in a heat exchange relationship with the one or more electric components of the turboelectric power system such that the one or more electric components impart thermal energy to the working fluid moving along the heat recovery loop, the heat recovery loop also positioned at least in part in a heat exchange relationship with the fuel line at the heat exchanger such that the working fluid imparts thermal energy to the fuel moving along the fuel line.

In a further aspect, an engine system is provided. The engine system includes a turboelectric power system having a gas turbine engine and one or more electric components including an electric generator operatively coupled with the gas turbine engine, the electric generator operable to generate electrical power. Further, the engine system includes a fuel line for providing a fuel to the gas turbine engine. In addition, the engine system includes a fuel deoxygenation system positioned along the fuel line and operable to reduce an amount of oxygen in the fuel. The fuel deoxygenation system is operable to receive electrical power from the turboelectric power system. Further, the engine system includes a main fuel pump system having a main fuel pump and an electric motor operatively coupled with the main fuel pump for driving the main fuel pump. The main fuel pump is positioned downstream of the fuel deoxygenation system along the fuel line. The electric motor is operable to receive electrical power from the turboelectric power system. In addition, the engine system includes an upstream heat exchanger positioned upstream of the fuel deoxygenation system along the fuel line and a downstream heat exchanger positioned downstream of the fuel deoxygenation system along the fuel line. In addition, the engine system includes a first heat recovery loop along which a first working fluid is movable. The first heat recovery loop is positioned at least in part in a heat exchange relationship with the one or more electric components of the turboelectric power system such that the one or more electric components impart thermal energy to the first working fluid. The first heat recovery loop is also positioned at least in part in a heat exchange relationship with the fuel line at the upstream heat exchanger such that the first working fluid imparts thermal energy to the fuel moving along the fuel line. Further, the engine system includes a second heat recovery loop along which a second working fluid is movable. The second heat recovery loop is positioned at least in part in a heat exchange relationship with the electric motor such that the electric motor imparts thermal energy to the second working fluid. The second heat recovery loop is also positioned at least in part in a heat exchange relationship with the fuel line at the downstream heat exchanger such that the second working fluid imparts thermal energy to the fuel moving along the fuel line.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a schematic cross-sectional view of an aviation gas turbine engine according to one example embodiment of the present subject matter;
FIG. 2 provides a schematic system diagram of a turbine engine system according to an example embodiment of the present subject matter;
FIG. 3 provides a schematic system diagram of another turbine engine system according to an example embodiment of the present subject matter;
FIG. 4 provides a schematic system diagram of yet another turbine engine system according to an example embodiment of the present subject matter; and
FIG. 5 provides example vehicles according to example embodiments of the present subject matter.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

The heat transfer or heat exchange relationships described herein may include thermal communication by conduction and/or convection. A heat transfer relationship may include a thermally conductive relationship that provides heat transfer through conduction (e.g., heat diffusion) between solid bodies and/or between a solid body and a fluid. Additionally, or in the alternative, a heat transfer relationship may include a thermally convective relationship that provides heat transfer through convection (e.g., heat transfer by bulk fluid flow) between a fluid and a solid body. It will be appreciated that convection generally includes a combination of a conduction (e.g., heat diffusion) and advection (e.g., heat transfer by bulk fluid flow). As used herein, reference to a heat exchange relationship may include conduction and/or convection.

Aspects of the present disclosure are directed to engine systems having an optimized architecture in which a turboelectric power system, a main fuel pump system, and a fuel deoxygenation system are combined in an efficient cooperative arrangement. The turboelectric power system includes an electric generator operatively coupled with a gas turbine engine. The electric generator is operable to generate electrical power. The generated electrical power is provided to electric components of the fuel deoxygenation system and an electric motor operable to drive a main fuel pump, among other possible electrical loads. In some embodiments, the electric motor synchronously drives a secondary or fuel deoxygenation pump along with the main fuel pump. In addition, engine fuel is utilized as a heat rejection medium or heat sink by the engine turboelectric power system to provide cooling thereto. The fuel deoxygenation system increases the acceptable fuel temperature or heat rejection capability of the fuel, which enhances the cooling of the electric components of the turboelectric power system.

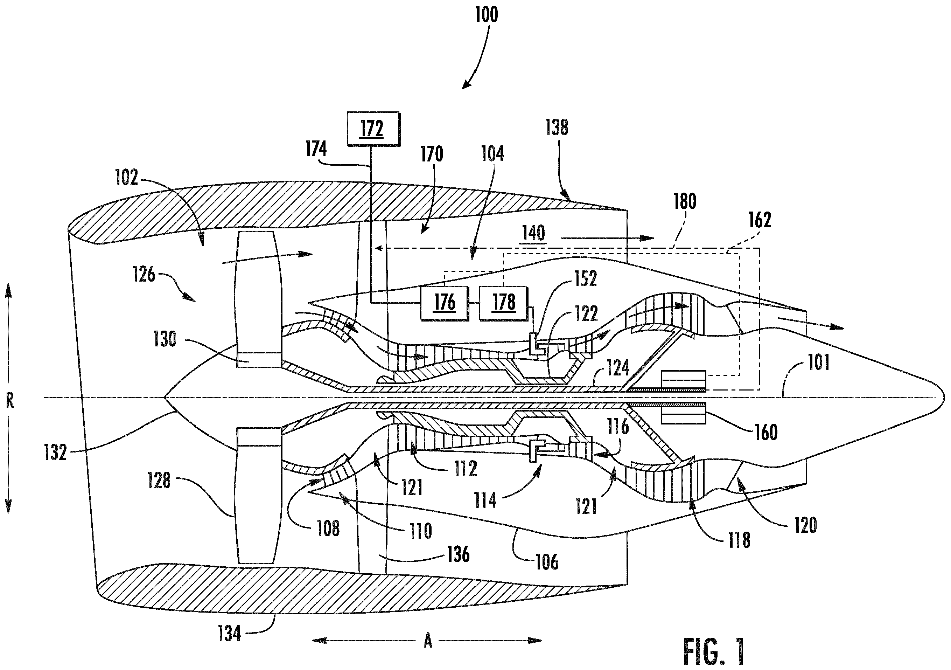

FIG. 1 provides a schematic, cross-sectional view of an aviation gas turbine engine in accordance with an exemplary embodiment of the present subject matter. The engine may be incorporated into an aircraft. For the embodiment depicted, the engine is configured as a high bypass turbofan engine 100. As shown in FIG. 1, the turbofan engine 100 defines an axial direction A (extending parallel to a longitudinal centerline or axis 101 provided for reference), a radial direction R, and a circumferential direction (extending about the longitudinal centerline 101). Although the turbofan 100 is described below and illustrated in FIG. 1 as representing an example aviation turbofan, it will be appreciated that the subject matter of the present disclosure may apply to other suitable types of engines and turbomachines. For instance, the subject matter of the present disclosure may apply to or be incorporated with other suitable turbine engines, such as steam and other gas turbine engines including, without limitation, turbojets, turboprop, turboshaft, aeroderivatives, auxiliary power units, etc.

As depicted in FIG. 1, the turbofan 100 includes a fan section 102 and a turbomachine or core engine 104 disposed downstream of the fan section 102. The exemplary core engine 104 includes a substantially tubular outer casing 106 that defines an annular core inlet 108. The outer casing 106 encases, in serial flow relationship, a compressor section including a booster or low pressure (LP) compressor 110 and a high pressure (HP) compressor 112; a combustion section 114; a turbine section including a high pressure (HP) turbine 116 and a low pressure (LP) turbine 118; and a jet exhaust nozzle section 120. The compressor section, combustion section 114, and turbine section together define at least in part a core air flowpath 121 extending from the annular core inlet 108 to the jet nozzle exhaust section 120. The turbofan engine 100 further includes one or more drive shafts. More specifically, the turbofan engine 100 includes a high pressure (HP) shaft or spool 122 drivingly connecting the HP turbine 116 to the HP compressor 112, and a low pressure (LP) shaft or spool 124 drivingly connecting the LP turbine 118 to the LP compressor 110.

The fan section 102 includes a fan 126 having a plurality of fan blades 128 coupled to a disk 130 in a spaced apart manner. The fan blades 128 and disk 130 are together rotatable about the longitudinal axis 101 by the LP shaft 124. The disk 130 is covered by rotatable front hub or spinner 132 aerodynamically contoured to promote an airflow through the plurality of fan blades 128. Further, an annular fan casing or outer nacelle 134 is provided, circumferentially surrounding the fan 126 and/or at least a portion of the core engine 104. The nacelle 134 is supported relative to the core engine 104 by a plurality of circumferentially-spaced outlet guide vanes 136. A downstream section 138 of the nacelle 134 extends over an outer portion of the core engine 104 so as to define a bypass airflow passage 140 therebetween.

Referring still to FIG. 1, for this embodiment, an electric generator 160 is operatively coupled with the LP shaft 124. In other embodiments, the electric generator 160 can be operatively coupled with the HP shaft 122. The electric generator 160 and the turbofan 100 are both components of a turboelectric power system. As will be appreciated, rotation of the LP shaft 124 causes the electric generator 160 to generate electrical power. The electrical power can be provided over a power bus 162 to various electrical power consuming devices. The electrical power can be conditioned, e.g., converted from Alternating Current (AC) to Direct Current (DC), by various power conditioning devices, such as power converters.

The turbofan 100 also includes a fuel delivery system 170, which includes a fuel supply 172 (e.g., a vehicle fuel tank), a fuel line 174, which may include one or more fuel lines, a fuel deoxygenation system 176 positioned along the fuel line 174, and a main fuel pump system 178 positioned along the fuel line 174. As depicted, the fuel delivery system provides fuel from the fuel supply 172 to the combustion section 114 of the core engine 104 of the turbofan engine 100. The combustion section 114 includes a plurality of fuel nozzles 152 arranged, for the embodiment shown, circumferentially about the centerline axis 101. The main fuel pump system 178 can include an electric motor for driving a main fuel pump operable to move the fuel along the fuel line 174 to the fuel nozzles 152. The main fuel pump can be a variable speed fuel pump, which may eliminate or minimize the need for a fuel bypass passage. Electrical power generated by the electric generator 160 can be directed over the power bus 162 to the electric motor to drive the main fuel pump.

The fuel deoxygenation system 176 may operate to reduce a free oxygen content of the fuel delivered to the combustion section 114, and more particularly to the fuel nozzles 152. The fuel deoxygenation system 176 can include one or more fuel oxygen reduction units. Each fuel oxygen reduction unit can include one or more components requiring electrical power, such as electric heaters, sensors, controllers, etc. Electrical power generated by the electric generator 160 can be directed over the power bus 162 to the components of the fuel deoxygenation system 176 that require electrical power. In addition, each fuel oxygen reduction unit can include one or more components requiring mechanical power, such as a fuel pump, gas pump, fuel/gas separator, and/or other rotating components. In some embodiments, one or more components of the fuel deoxygenation system 176 that require mechanical power can be synchronously driven by the electric motor that drives the main fuel pump or can be driven by a separate fuel deoxygenation electric motor or motors. Electrical power generated by the electric generator 160 can be directed over the power bus 162 to the fuel deoxygenation electric motor.

In addition, a heat recovery loop 180 along which a working fluid flows is provided to recover heat generated by the electric components of the turboelectric power generation system, e.g., heat generated by the electric generator 160, power conditioning devices, switches, etc. The heat recovery loop 180 can include one or more open and/or closed loops. The heated working fluid is directed to one or more heat exchangers that facilitate heat transfer between the relatively hot working fluid flowing along the heat recovery loop 180 and the fuel flowing along the fuel line 174. In some embodiments, working fluid flowing along the heat recovery loop 180 recovers heat from the electric motor of the main fuel pump system 178. The heated working fluid can be directed to one or more heat exchangers that facilitate heat transfer between the relatively hot working fluid flowing along the heat recovery loop 180 and the fuel flowing along the fuel line 174. Accordingly, a turbine engine system is provided in FIG. 1 in which the main fuel pump of the main fuel pump system 178 and fuel deoxygenation system 176 are electrically-powered or driven by the turboelectric power system and the fuel delivered to the combustion section 114 of the turbofan 100 is used as a heat rejection medium or heat sink for the electric components of the turboelectric power system. Various turbine engine system architectures in which a turboelectric power system, a main fuel pump system, and a fuel deoxygenation system are combined in an efficient cooperative arrangement are provided below.

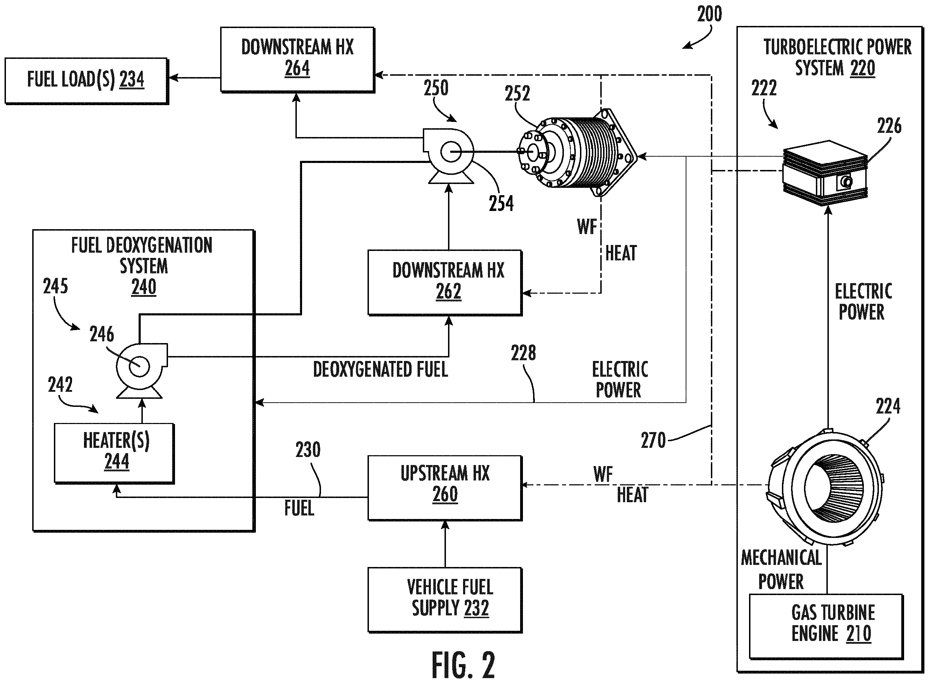

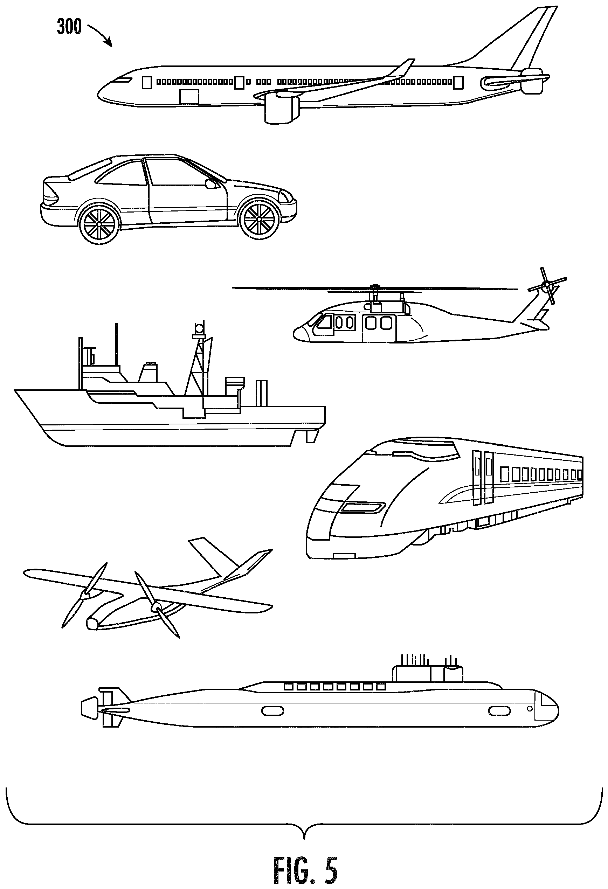

FIG. 2 provides a schematic system diagram of a turbine engine system 200 according to one example embodiment of the present subject matter. The turbine engine system 200 of FIG. 2 can be mounted to or included onboard a vehicle, such as any of the vehicles shown in FIG. 5. As shown, the turbine engine system 200 includes a turboelectric power system 220 that includes a gas turbine engine 210, a fuel deoxygenation system 240, and a main fuel pump system 250. The gas turbine engine 210 can be an aviation gas turbine engine mounted to an aircraft, for example. For instance, the gas turbine engine 210 can be the turbofan 100 of FIG. 1. As will be appreciated, the gas turbine engine 210 is operable to output mechanical power, which can be used to produce thrust for its associated aircraft, for example.

In addition, for the depicted embodiment of FIG. 2, the mechanical power output by the gas turbine engine 210 causes an electric generator 224 of the turboelectric power system 220 to convert the mechanical energy provided by the gas turbine engine 210 into electrical energy. Thus, ultimately, the electric generator 224 can output electrical power. The electrical power output by the electric generator 224 can be provided or otherwise directed to various components of the turbine engine system 200 and to other loads onboard the aircraft. The electric generator 224 can be solely an electric generator or can be a combination electric motor/generator. The electric generator 224 is operatively coupled with the gas turbine engine 210. As one example, the electric generator 224 can be coupled with an LP shaft or spool of the gas turbine engine 210. As another example, the electric generator 224 can be coupled with an HP shaft or spool of the gas turbine engine 210. In other embodiments, the electric generator 224 can be coupled with other suitable rotary components.

The turboelectric power system 220 has one or more electric components 222. The one or more electric components 222 include the electric generator 224 as well as other components. For instance, as shown in FIG. 2, the one or more electric components 222 can include one or more power conditioning devices 226 electrically connected to the electric generator 224. The power conditioning devices 226 can condition the electrical power in any suitable manner. As one example, the power conditioning devices 226 can include one or more rectifiers that convert alternating current (AC) generated by the electric generator 224 to direct current (DC). The one or more electric components 222 of the turboelectric power system 220 can include other components as well, such as electric switches, one or more energy storage devices (e.g., batteries or battery pack), processing devices, etc. Electrical power generated by the electric generator 224 and conditioned by the one or more power conditioning devices 226 can be provided to power consuming loads via a power bus 228. Notably, during operation, the one or more electric components 222 of the turboelectric power system 220 can generate substantial heat. As will be explained further below, heat generated by the one or more electric components 222 of the turboelectric power system 220 can be recovered by and ultimately rejected or imparted to fuel provided to the gas turbine engine 210.

The turboelectric power system 220 includes a fuel line 230 for providing a fuel to the gas turbine engine 210, e.g., to one or more fuel nozzles thereof that direct fuel into a combustor of the gas turbine engine 210. Particularly, the fuel line 230 carries fuel from a fuel supply, such as a vehicle fuel supply 232, to the gas turbine engine 210. The fuel line 230 can be a single line or can include multiple lines or conduits in fluid communication.

A fuel conditioning system is positioned along the fuel line 230. Generally, the fuel conditioning system is operable to condition the fuel. For this embodiment, the fuel conditioning system is a fuel deoxygenation system 240. Generally, the fuel deoxygenation system 240 reduces the amount of oxygen in the fuel. In this manner, there is a reduced likelihood or risk that the fuel will "coke" beyond an unacceptable amount when heated. The fuel deoxygenation system 240 can include one or more electrical components 242 that require electrical power, such as one or more electric heaters 244, sensors, controllers, electric motors, etc. The electric heaters 244 can apply heat or impart thermal energy to the fuel. Electrical power generated by the electric generator 224 can be provided to the electrical components 242 of the fuel deoxygenation system 240, including the electric heaters 244. The fuel deoxygenation system 240 also includes one or more mechanical components 245 that require mechanical power, such as a fuel deoxygenation pump 246, a gas pump, a fuel/gas separator, and/or other rotating components. The fuel deoxygenation pump 246 is operable to move fuel through the fuel deoxygenation system 240. The fuel deoxygenation pump 246 can control the volume and mass of fuel flowing through the fuel deoxygenation system 240. The fuel deoxygenation pump 246 can be electrically or mechanically driven, for example. The fuel exits the fuel deoxygenation system 240 as conditioned or deoxygenated fuel as shown in FIG. 2.

The main fuel pump system 250 includes a main fuel pump 254 and an electric motor 252 for driving the main fuel pump 254. The main fuel pump 254 is positioned downstream of the fuel deoxygenation system 240 along the fuel line 230. The main fuel pump 254 is operable to move the fuel along the fuel line 230. As illustrated in FIG. 2, the main fuel pump 254 can pump or move the fuel downstream to one or more fuel loads 234. The fuel loads 234 can include any fuel consuming device, machine, or system. For instance, the fuel loads 234 can include the combustor of the gas turbine engine 210, one or more servos, etc. The electric motor 252 is operatively coupled with the main fuel pump 254. For instance, the electric motor 252 can be mechanically coupled with the main fuel pump 254 via a rotatable shaft as shown in FIG. 2. The electric motor 252 is operable to drive the main fuel pump 254. Electrical power generated by the electric generator 224 is provided to the electric motor 252, e.g., via the power bus 228. The electric motor 252 can utilize the provided electrical power to drive the main fuel pump 254. In some embodiments, the main fuel pump 254 is an electrically-driven variable-speed fuel pump. In this manner, there is no or minimal need for a fuel bypass loop. The electric motor 252 can be controlled to vary the speed of the main fuel pump 254 based at least in part on the demanded thrust or output of the gas turbine engine, among other factors. A controller or other suitable control device be used to control the output of the electric motor 252 and hence the speed of the main fuel pump 254.

In addition, for this embodiment, the electric motor 252 is operatively coupled with the fuel deoxygenation pump 246. For instance, the electric motor 252 can be mechanically coupled with the fuel deoxygenation pump 246 via a rotatable shaft as shown in FIG. 2. The main fuel pump 254 and the fuel deoxygenation pump 246 can be mechanically coupled to the same shaft or different shafts mechanically coupled with one another, directly or indirectly. In this regard, the electric motor 252 can utilize the provided electrical power to synchronously drive the main fuel pump 254 and the fuel deoxygenation pump 246. Thus, the main fuel pump 254 and the fuel deoxygenation pump 246 can be electrically-driven pumps. As noted above, the main fuel pump 254 can be a variable-speed fuel pump. As the fuel deoxygenation pump 246 and the main fuel pump 254 are both operatively coupled with the electric motor 252 in this embodiment, the fuel deoxygenation pump 246 can likewise be a variable-speed fuel pump. By utilizing the electric motor 252 to drive the fuel deoxygenation pump 246 in addition to the main fuel pump 254, the overall package volume and mass of the turbine engine system 200 can be minimized. In some embodiments, other mechanical components 245 of the fuel deoxygenation system 240 can be operatively coupled with and synchronously driven by the electric motor 252 in addition to the fuel deoxygenation pump 246. In some embodiments, all rotating mechanical components 245 can be driven by the electric motor 252. In alternative embodiments, the main fuel pump 254 and/or the fuel deoxygenation pump 246 can be mechanically-driven pumps.

The turbine engine system 200 includes one or more heat exchangers. For this embodiment, the turbine engine system 200 includes a plurality of heat exchangers, including an upstream heat exchanger 260 positioned upstream of the fuel deoxygenation system 240 along the fuel line 230, a first downstream heat exchanger 262 positioned downstream of the fuel deoxygenation system 240 along the fuel line 230, and a second downstream heat exchanger 264 positioned downstream of the fuel deoxygenation system 240 and the main fuel pump 254 along the fuel line 230. The upstream heat exchanger 260 is positioned upstream of the first downstream heat exchanger 262 along the fuel line 230. The first downstream heat exchanger 262 is positioned upstream of the second downstream heat exchanger 264 along the fuel line 230.

The turbine engine system 200 further includes a heat recovery loop 270 along which a working fluid WF is movable. The heat recovery loop 270 can be an open or closed loop and can be a single loop or can contain multiple loops. The working fluid WF can be any suitable type of working fluid. As one example, the working fluid WF can be oil. As depicted in FIG. 2, the heat recovery loop 270 is positioned at least in part in a heat exchange relationship with the one or more electric components 222 of the turboelectric power system 220 such that the one or more electric components 222 impart thermal energy to the working fluid WF moving along the heat recovery loop 270. Stated another way, the heat recovery loop 270 is positioned such that the working fluid WF flowing along the heat recovery loop 270 can receive at least a portion of the heat generated by the one or more electric components 222 of the turboelectric power system 220. As a result, the electric components 222 of the turboelectric power system 220 can be cooled.

As further shown in FIG. 2, the heat recovery loop 270 is also positioned at least in part in a heat exchange relationship with the fuel line 230 such that the working fluid WF imparts thermal energy to the fuel moving along the fuel line 230. The heat recovery loop 270 can be positioned in a heat exchange relationship with the fuel line 230 at the various heat exchangers 260, 262, 264. Particularly, for this embodiment, the heat recovery loop 270 is positioned at least in part in a heat exchange relationship with the fuel line 230 at the upstream heat exchanger 260 such that the working fluid WF flowing along the heat recovery loop 270 imparts thermal energy to the fuel moving along the fuel line 230 upstream of the fuel deoxygenation system 240. In this manner, the fuel can be heated upstream of the fuel deoxygenation system 240. The fuel is at a lower temperature at the inlet of the fuel deoxygenation system 240 than when it exits as deoxygenated fuel at the outlet of the fuel deoxygenation system 240. By imparting heat to the fuel upstream of the fuel deoxygenation system 240, a greater temperature increase in the fuel can be achieved compared to imparting heat to the fuel downstream of the fuel deoxygenation system 240, especially where the heated working fluid WF is a low quality heat source.

In addition, for this embodiment, the heat recovery loop 270 is positioned at least in part in a heat exchange relationship with the fuel line 230 at the first downstream heat exchanger 262 such that the working fluid WF imparts thermal energy to the fuel moving along the fuel line 230 downstream of the fuel deoxygenation system 240. In this manner, the temperature of the fuel can be further increased or better maintained (e.g., by offsetting heat losses) downstream of the fuel deoxygenation system 240. Moreover, for this embodiment, the heat recovery loop 270 is also positioned at least in part in a heat exchange relationship with the electric motor 252 such that the electric motor 252 imparts thermal energy to the working fluid WF moving along the heat recovery loop 270. In this regard, the working fluid WF heated by the heat generated by the electric motor 252 can be directed through the first downstream heat exchanger 262. As noted above, the heated working fluid WF imparts thermal energy to the fuel moving along the fuel line 230 at the first downstream heat exchanger 262.

Further, for this embodiment, the heat recovery loop 270 is positioned at least in part in a heat exchange relationship with the fuel line 230 at the second downstream heat exchanger 264 such that the working fluid WF imparts thermal energy to the fuel moving along the fuel line 230 downstream of the fuel deoxygenation system 240 and the main fuel pump 254. In this manner, the temperature of the fuel can be further increased or better maintained (e.g., by offsetting heat losses) downstream of the main fuel pump 254. By providing heat to the fuel downstream of the main fuel pump 254, fuel heat losses between the main fuel pump 254 and the fuel loads 234 can be minimized. As noted above, the heat recovery loop 270 is also positioned at least in part in a heat exchange relationship with the electric motor 252 such that the electric motor 252 imparts thermal energy to the working fluid WF moving along the heat recovery loop 270. In this regard, the working fluid WF heated by the heat generated by the electric motor 252 can be directed through the second downstream heat exchanger 264. As noted above, the heated working fluid WF imparts thermal energy to the fuel moving along the fuel line 230 at the second downstream heat exchanger 264.

The architecture of the turbine engine system 200 in which the turboelectric power system 220, main fuel pump system 250, and fuel deoxygenation system 240 are combined in a cooperative arrangement provides a number of advantages and benefits. For instance, the electric generator 224 of the turboelectric power system 220 can provide electrical power for the electrical components 242 of the fuel deoxygenation system 240, including the electric motor 252 that drives the main fuel pump 254, and in this embodiment, the fuel deoxygenation pump 246 and/or other mechanical components 245 of the fuel deoxygenation system 240. The electric generator 224 can also generate electrical power for other electrical loads as well, such as one or more aircraft systems of the aircraft to which the gas turbine engine 210 is mounted. The turboelectric power system 220 can generate and provide electrical power for the fuel deoxygenation and main fuel pump systems 240, 250 without need to upsize components of the electric generator 224 or other components of the turboelectric power system 220.

Further, utilization of the fuel deoxygenation system 240 to deoxygenate the fuel allows substantially more heat to be absorbed by the fuel prior to combustion in the combustor of the gas turbine engine 210 without or with limited risk of the fuel coking, etc. In this regard, the fuel can be utilized as a heatsink to accept heat generated by components of the turboelectric power system 220 and other engine systems (e.g., lubrication systems). The increased capability of the fuel to accept thermal energy or heat provides enhanced cooling capability of the one or more electric components 222 of the turboelectric power system 220 and other systems of the gas turbine engine 210.

In addition, the overall package volume and mass of the turbine engine system 200 can be minimized by utilizing the electric motor 252 to drive one or more of the mechanical components 245, such as the fuel deoxygenation pump 246, in addition to the main fuel pump 254. This allows the electric motor 252 to synchronously drive the main fuel pump 254 and the mechanical components 245, such as the fuel deoxygenation pump 246. Further, as the main fuel pump 254 is driven by the electric motor 252, the main fuel pump 254 is decoupled from the gas turbine engine 210. Accordingly, the main fuel pump 254 can be but is not required to be synchronous with the speed of the gas turbine engine 210. In addition, with an electrically-driven pump, minimal or no fuel bypass is required around the main fuel pump 254. This reduces the mass and packaging of the turbine engine system 200.

The turbine engine system 200 of FIG. 2 is shown having a particular system architecture according to one example embodiment of the present subject matter. However, in other embodiments, the turbine engine system 200 can have other suitable configurations.

As one example, in some embodiments, the turbine engine system 200 can include the upstream heat exchanger 260 and the first downstream heat exchanger 262 but not the second downstream heat exchanger 264. Accordingly, in such embodiments, the heat recovery loop 270 is in a heat exchange relationship with the fuel line 230 and thus the fuel flowing therein upstream of the fuel deoxygenation system 240 at the upstream heat exchanger 260 as well as at first downstream heat exchanger 262, which is positioned downstream of the fuel deoxygenation system 240 and upstream of the main fuel pump 254 along the fuel line 230.

As another example, in some embodiments, the turbine engine system 200 can include the upstream heat exchanger 260 and the second downstream heat exchanger 264 but not the first downstream heat exchanger 262. Accordingly, in such embodiments, the heat recovery loop 270 is in a heat exchange relationship with the fuel line 230 and thus the fuel flowing therein upstream of the fuel deoxygenation system 240 at the upstream heat exchanger 260 as well as at second downstream heat exchanger 264 positioned downstream of the fuel deoxygenation system 240 and the main fuel pump 254 along the fuel line 230.

As yet another example, in some embodiments, the turbine engine system 200 can include the first downstream heat exchanger 262 and the second downstream heat exchanger 264 but not the upstream heat exchanger 260. Accordingly, in such embodiments, the heat recovery loop 270 is in a heat exchange relationship with the fuel line 230 and thus the fuel flowing therein downstream of the fuel deoxygenation system 240 at the first downstream heat exchanger 262, which is positioned downstream of the fuel deoxygenation system 240 and upstream of the main fuel pump 254 along the fuel line 230, and at the second downstream heat exchanger 264 downstream of the main fuel pump 254 but not upstream of the fuel deoxygenation system 240 along the fuel line 230.

As another example, in some embodiments, the turbine engine system 200 can include the upstream heat exchanger 260 but not the first downstream heat exchanger 262 or the second downstream heat exchanger 264. Accordingly, in such embodiments, the heat recovery loop 270 is in a heat exchange relationship with the fuel line 230 and thus the fuel flowing therein upstream of the fuel deoxygenation system 240 at the upstream heat exchanger 260 but not downstream of the fuel deoxygenation system 240.

As yet another example, in some embodiments, the turbine engine system 200 can include the second downstream heat exchanger 264 but not the upstream heat exchanger 260 or the first downstream heat exchanger 262. Accordingly, in such embodiments, the heat recovery loop 270 is in a heat exchange relationship with the fuel line 230 and thus the fuel flowing therein downstream of the main fuel pump system 250 at the second downstream heat exchanger 264 but not upstream of the fuel deoxygenation system 240 or between the fuel deoxygenation system 240 and the main fuel pump 254.

As a further example, in some embodiments, the turbine engine system 200 can include the first downstream heat exchanger 262 but not the upstream heat exchanger 260 or the second downstream heat exchanger 264. Accordingly, in such embodiments, the heat recovery loop 270 is in a heat exchange relationship with the fuel line 230 and thus the fuel flowing therein between the fuel deoxygenation system 240 and the main fuel pump 254 at the first downstream heat exchanger 262 but not upstream of the fuel deoxygenation system 240 or downstream of the main fuel pump 254.

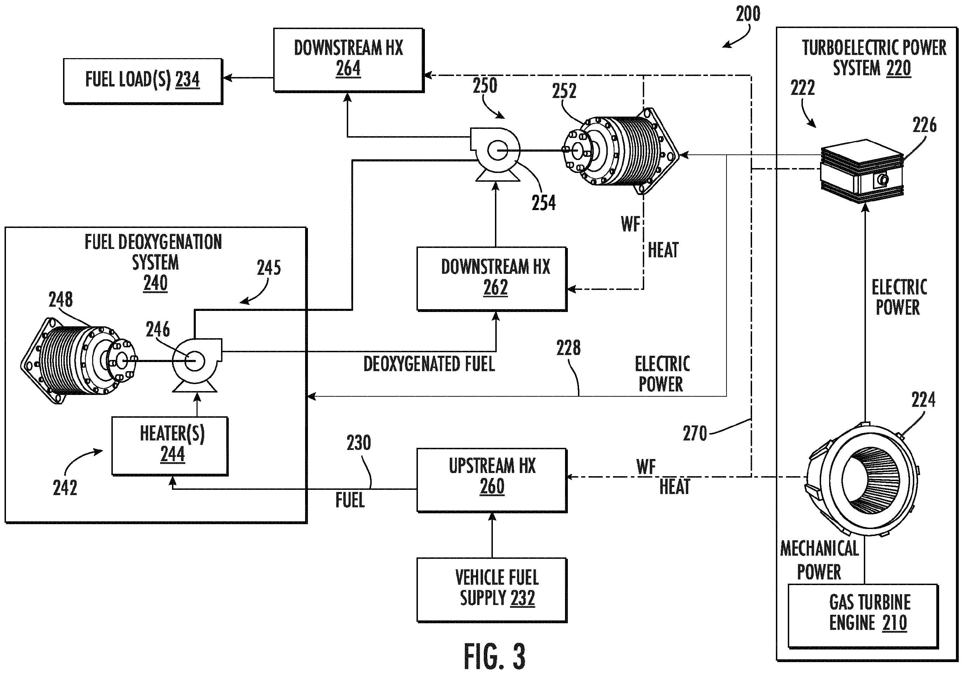

FIG. 3 provides a schematic system diagram of another turbine engine system 200 according to an example embodiment of the present subject matter. The turbine engine system 200 provided in FIG. 3 is configured in the same manner as shown in FIG. 2 and described in the accompany text except as provided below. The turbine engine system 200 of FIG. 3 can be mounted to or included onboard a vehicle, such as any of the vehicles shown in FIG. 5.

For this embodiment, the fuel deoxygenation system 240 has a fuel deoxygenation motor 248 operatively coupled with one or more of the mechanical components 245, such as the fuel deoxygenation pump 246. For instance, the fuel deoxygenation motor 248 can be mechanically coupled with the fuel deoxygenation pump 246 via a rotatable shaft as shown in FIG. 3. The fuel deoxygenation motor 248 is operable to drive the fuel deoxygenation pump 246. Electrical power generated by the electric generator 224 is provided to the fuel deoxygenation motor 248, e.g., via the power bus 228. The fuel deoxygenation motor 248 can utilize the provided electrical power to drive the fuel deoxygenation pump 246 as well as other mechanical components 245 operatively coupled thereto. In some embodiments, the fuel deoxygenation pump 246 is an electrically-driven variable-speed fuel pump. The fuel deoxygenation motor 248 can be controlled to vary the speed of the fuel deoxygenation pump 246. A controller or other suitable control device be used to control to the output of the fuel deoxygenation motor 248 and hence the speed of the fuel deoxygenation pump 246 and/or other mechanical components 245 coupled thereto.

Accordingly, for the depicted turbine engine system 200 of FIG. 3, the fuel deoxygenation pump 246 and/or other mechanical components 245 and the main fuel pump 254 are electrically-driven by their respective separate motors. In this regard, the mechanical components 245 including the fuel deoxygenation pump 246 and the main fuel pump 254 are mechanically decoupled. Hence, the fuel deoxygenation pump 246 (as well as other mechanical components 245) and the main fuel pump 254 can be driven by their respective motors at different speeds. This may allow for a customized pump speed schedule for each pump, among other benefits.

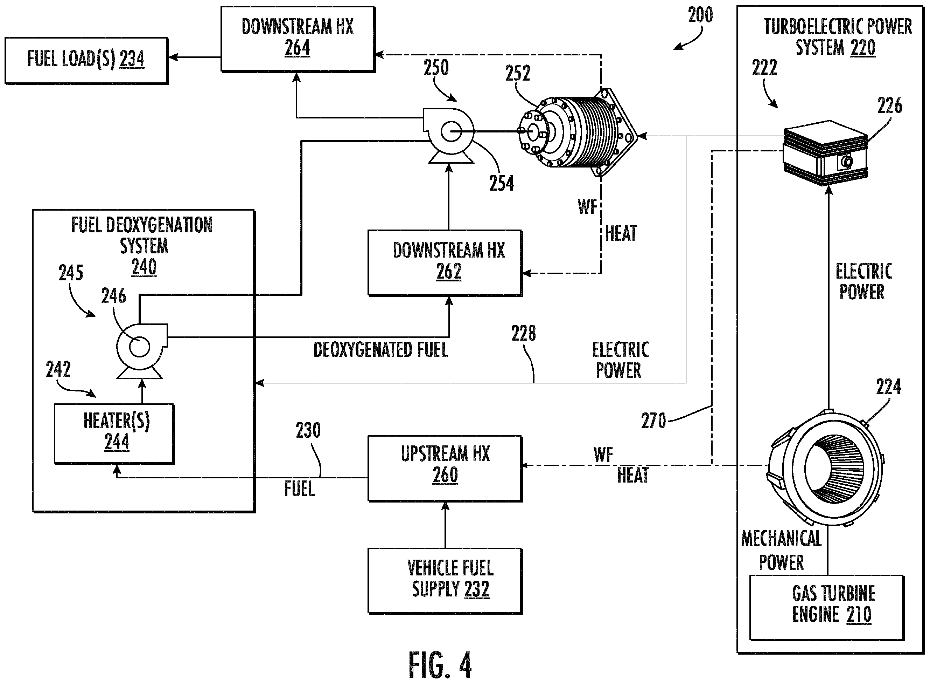

FIG. 4 provides a schematic system diagram of yet another turbine engine system 200 according to an example embodiment of the present subject matter. The turbine engine system 200 provided in FIG. 4 is configured in the same manner as shown in FIG. 2 and described in the accompany text except as provided below. The turbine engine system 200 of FIG. 4 can be mounted to or included onboard a vehicle, such as any of the vehicles shown in FIG. 5.

As noted, the turbine engine system 200 includes a turboelectric power system 220 having a gas turbine engine 210 and one or more electric components 222 including an electric generator 224 operatively coupled with the gas turbine engine 210. The electric generator 224 is operable to generate electrical power. The fuel line 230 provides a fuel to the fuel loads 234, such as a combustor of the gas turbine engine 210. A fuel deoxygenation system 240 is positioned along the fuel line 230 and is operable to reduce an amount of oxygen in the fuel. The fuel deoxygenation system 240 is operable to receive electrical power from the turboelectric power system 220.

The turbine engine system 200 also includes a main fuel pump system 250 having a main fuel pump 254 and an electric motor 252 operatively coupled with the main fuel pump 254 for driving the main fuel pump 254. The main fuel pump 254 is positioned downstream of the fuel deoxygenation system 240 along the fuel line 230. The electric motor 252 is operable to receive electrical power from the turboelectric power system 220. In addition, the turbine engine system 200 includes an upstream heat exchanger 260 positioned upstream of the fuel deoxygenation system 240 along the fuel line 230 and at least one downstream heat exchanger positioned downstream of the fuel deoxygenation system 240 along the fuel line. In some embodiments, the downstream heat exchanger is a first downstream heat exchanger 262 positioned between the fuel deoxygenation system 240 and the main fuel pump 254 along the fuel line 230. In other embodiments, the downstream heat exchanger is a second downstream heat exchanger 264 positioned downstream of the main fuel pump 254 along the fuel line 230. In such embodiments, the main fuel pump 254 is itself positioned downstream of the fuel deoxygenation system 240. In some embodiments, the turbine engine system 200 can include both the first and second downstream heat exchangers 262, 264.

Notably, for this embodiment, the turbine engine system 200 includes a first heat recovery loop 270A and a separate second heat recovery loop 270B. A first working fluid WF1 is movable along the first heat recovery loop 270A. The first working fluid WF1 can be any suitable type of working fluid. As one example, the first working fluid WF1 can be oil. The first heat recovery loop 270A is positioned at least in part in a heat exchange relationship with the one or more electric components 222 of the turboelectric power system 220 such that the one or more electric components 222 impart thermal energy to the first working fluid WF1. The first heat recovery loop 270A is also positioned at least in part in a heat exchange relationship with the fuel line 230 at the upstream heat exchanger 260 such that the first working fluid WF1 imparts thermal energy to the fuel moving along the fuel line 230.

A second working fluid WF2 is movable along the second heat recovery loop 270B. The second working fluid WF2 can be any suitable type of working fluid. As one example, the second working fluid WF2 can be oil. The second heat recovery loop 270B is positioned at least in part in a heat exchange relationship with the electric motor 252 such that the electric motor 252 imparts thermal energy to the second working fluid WF2. The second heat recovery loop 270B is also positioned at least in part in a heat exchange relationship with the fuel line 230 at one or more downstream heat exchangers such that the second working fluid WF2 imparts thermal energy to the fuel moving along the fuel line 230. As noted, the second heat recovery loop 270B can be positioned at least in part in a heat exchange relationship with the fuel line 230 at the first downstream heat exchanger 262, the second downstream heat exchanger 264, or both.

Advantageously, the electric motor 252 driving the main fuel pump 254, and in some embodiments the fuel deoxygenation pump 246 and/or other mechanical components 245, can be positioned relatively close to the fuel line 230 (compared to the electric components 222 of the turboelectric power system 220) and can produce significant heat. The second working fluid WF2 flowing along the second heat recovery loop 270B can recover heat from the electric motor 252, and due to the relatively short physical distance between the electric motor 252 and the fuel line 230 as well as the significant heat produced by the electric motor 252, the second working fluid WF2 can be a relatively higher quality heat source compared to the first working fluid WF 1 that recovers heat from the electric components 222 of the turboelectric power system 220. Thus, in the depicted embodiment of FIG. 4, the first working fluid WF 1 flowing along the first heat recovery loop 270A, which is a relatively lower quality heat source, imparts thermal energy to the fuel upstream of the fuel deoxygenation system 240, which makes the recovered relatively low quality heat source most impactful. In addition, the second working fluid WF2 flowing along the second heat recovery loop 270B, which is a relatively higher quality heat source compared to the first working fluid WF1, imparts thermal energy to the fuel downstream of the fuel deoxygenation system 240. In this way, the recovered relatively high quality heat source impacts the temperature of the fuel as close as possible to the fuel loads 234, e.g., the combustor of the gas turbine engine 210.

FIG. 5 provides example vehicles 300 according to example embodiments of the present subject matter. The turbine engine systems 200 of the present disclosure can be implemented on an aircraft, helicopter, automobile, boat, submarine, train, unmanned aerial vehicle or drone and/or on any other suitable vehicle. While the present disclosure is described herein with reference to an aircraft implementation, this is intended only to serve as an example and not to be limiting. One of ordinary skill in the art would understand that the engine systems of the present disclosure can be implemented on other vehicles without deviating from the scope of the present disclosure.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the invention are provided by the subject matter of the following clauses:
1. An engine system, comprising: a turboelectric power system having a gas turbine engine and one or more electric components, at least one of the one or more electric components operable to generate electrical power; a fuel line for providing a fuel to the gas turbine engine; a fuel conditioning system positioned along the fuel line and operable to condition the fuel, the fuel conditioning system being operable to receive electrical power from the turboelectric power system; a main fuel pump operable to move the fuel along the fuel line; a heat exchanger positioned along the fuel line; and a heat recovery loop along which a working fluid is movable, the heat recovery loop positioned at least in part in a heat exchange relationship with the one or more electric components of the turboelectric power system such that the one or more electric components impart thermal energy to the working fluid moving along the heat recovery loop, the heat recovery loop also positioned at least in part in a heat exchange relationship with the fuel line at the heat exchanger such that the working fluid imparts thermal energy to the fuel moving along the fuel line.
2. The engine system of any preceding clause, wherein the heat exchanger is an upstream heat exchanger positioned upstream of the fuel conditioning system along the fuel line.
3. The engine system of any preceding clause, wherein the heat exchanger is a downstream heat exchanger positioned downstream of the fuel conditioning system along the fuel line.
4. The engine system of any preceding clause, wherein the heat exchanger is a downstream heat exchanger positioned downstream of the fuel conditioning system and the main fuel pump along the fuel line.
5. The engine system of any preceding clause, wherein the heat exchanger is an upstream heat exchanger positioned upstream of the fuel conditioning system along the fuel line, and wherein the engine system further comprises: a downstream heat exchanger positioned downstream of the fuel conditioning system along the fuel line, and wherein the heat recovery loop is positioned at least in part in a heat exchange relationship with the fuel line at the downstream heat exchanger such that the working fluid imparts thermal energy to the fuel moved along the fuel line.
6. The engine system of any preceding clause, wherein the downstream heat exchanger is a first downstream heat exchanger positioned between the fuel conditioning system and the main fuel pump along the fuel line, and wherein the engine system further comprises: a second downstream heat exchanger positioned downstream of the fuel conditioning system and the main fuel pump along the fuel line, and wherein the heat recovery loop is positioned at least in part in a heat exchange relationship with the fuel line at the second downstream heat exchanger such that the working fluid imparts thermal energy to the fuel moved along the fuel line.
7. The engine system of any preceding clause, wherein the fuel conditioning system is a fuel deoxygenation system.
8. The engine system of any preceding clause, wherein the fuel deoxygenation system has one or more heaters operable to impart thermal energy to the fuel moving along the fuel line, and wherein the one or more heaters are provided electrical power generated by the one or more electric components of the turboelectric power system.
9. The engine system of any preceding clause, further comprising: an electric motor operatively coupled with the main fuel pump and operable to drive the main fuel pump, the electric motor being operable to receive electrical power from the turboelectric power system, and wherein the fuel deoxygenation system has one or more mechanical components requiring mechanical power, and wherein at least one of the one or more mechanical components is operatively coupled with the electric motor.
10. The engine system of any preceding clause, wherein the fuel deoxygenation system has a fuel deoxygenation pump operable to move the fuel through the fuel deoxygenation system and a fuel deoxygenation motor operatively coupled with the deoxygenation pump and operable to drive the deoxygenation pump, and wherein the at least one of the one or more electric components operable to generate electrical power generates electrical power that is provided to the fuel deoxygenation motor.
11. The engine system of any preceding clause, wherein the main fuel pump is a variable speed fuel pump.
12. The engine system of any preceding clause, wherein the one or more electric components include an electric generator operatively coupled with the gas turbine engine.
13. The engine system of any preceding clause, further comprising: an electric motor operatively coupled with the main fuel pump and operable to drive the main fuel pump, the electric motor being operable to receive electrical power from the turboelectric power system, and wherein the heat recovery loop is positioned at least in part in a heat exchange relationship with the electric motor such that the electric motor imparts thermal energy to the working fluid moving along the heat recovery loop, and wherein the working fluid heated by the heat generated by the electric motor is directed through the heat exchanger such that the working fluid heated by the electric motor imparts thermal energy to the fuel moving along the fuel line at the heat exchanger.
14. An engine system, comprising: a turboelectric power system having a gas turbine engine and one or more electric components including an electric generator operatively coupled with the gas turbine engine, the electric generator operable to generate electrical power; a fuel line for providing a fuel to the gas turbine engine; a fuel deoxygenation system positioned along the fuel line and operable to reduce an amount of oxygen in the fuel, the fuel deoxygenation system operable to receive electrical power from the turboelectric power system; a main fuel pump positioned downstream of the fuel deoxygenation system along the fuel line and operable to move the fuel along the fuel line; a heat exchanger positioned along the fuel line; and a heat recovery loop along which a working fluid is movable, the heat recovery loop positioned at least in part in a heat exchange relationship with the one or more electric components of the turboelectric power system such that the one or more electric components impart thermal energy to the working fluid moving along the heat recovery loop, the heat recovery loop also positioned at least in part in a heat exchange relationship with the fuel line at the heat exchanger such that the working fluid imparts thermal energy to the fuel moving along the fuel line.
15. The engine system of any preceding clause, further comprising: an electric motor operatively coupled with the main fuel pump and operable to drive the main fuel pump, the electric motor operable to receive electrical power from the turboelectric power system, and wherein the fuel deoxygenation system has a fuel deoxygenation pump operable to move the fuel through the fuel deoxygenation system, and wherein the fuel deoxygenation pump is operatively coupled with and driven by the electric motor.
16. The engine system of any preceding clause, wherein the fuel deoxygenation system has a fuel deoxygenation pump operable to move the fuel through the fuel deoxygenation system and a fuel deoxygenation motor operatively coupled with the deoxygenation pump and operable to drive the deoxygenation pump, and wherein the at least one of the one or more electric components operable to generate electrical power generates electrical power that is provided to the fuel deoxygenation motor.
17. An engine system, comprising: a turboelectric power system having a gas turbine engine and one or more electric components including an electric generator operatively coupled with the gas turbine engine, the electric generator operable to generate electrical power; a fuel line for providing a fuel to the gas turbine engine; a fuel deoxygenation system positioned along the fuel line and operable to reduce an amount of oxygen in the fuel, the fuel deoxygenation system operable to receive electrical power from the turboelectric power system; a main fuel pump system having a main fuel pump and an electric motor operatively coupled with the main fuel pump for driving the main fuel pump, the main fuel pump being positioned downstream of the fuel deoxygenation system along the fuel line, the electric motor operable to receive electrical power from the turboelectric power system; an upstream heat exchanger positioned upstream of the fuel deoxygenation system along the fuel line; a downstream heat exchanger positioned downstream of the fuel deoxygenation system along the fuel line; a first heat recovery loop along which a first working fluid is movable, the first heat recovery loop positioned at least in part in a heat exchange relationship with the one or more electric components of the turboelectric power system such that the one or more electric components impart thermal energy to the first working fluid, the first heat recovery loop also positioned at least in part in a heat exchange relationship with the fuel line at the upstream heat exchanger such that the first working fluid imparts thermal energy to the fuel moving along the fuel line; and a second heat recovery loop along which a second working fluid is movable, the second heat recovery loop positioned at least in part in a heat exchange relationship with the electric motor such that the electric motor imparts thermal energy to the second working fluid, the second heat recovery loop also positioned at least in part in a heat exchange relationship with the fuel line at the downstream heat exchanger such that the second working fluid imparts thermal energy to the fuel moving along the fuel line.
18. The engine system of any preceding clause, wherein the downstream heat exchanger is positioned between the fuel deoxygenation system and the main fuel pump along the fuel line.
19. The engine system of any preceding clause, wherein the downstream heat exchanger is positioned downstream of the main fuel pump along the fuel line.
20. The engine system of any preceding clause, wherein the engine system is mounted to a vehicle.

## Claims

1. An engine system (200), comprising:
a turboelectric power system (220) having a gas turbine engine (210) and one or more electric components (222), at least one of the one or more electric components (222) operable to generate electrical power;
a fuel line (230) for providing a fuel to the gas turbine engine (210);
a fuel conditioning system (240) positioned along the fuel line (230) and operable to condition the fuel, the fuel conditioning system (240) being operable to receive electrical power from the turboelectric power system (220);
a main fuel pump (254) operable to move the fuel along the fuel line (230);
a heat exchanger (260, 262, 264) positioned along the fuel line (230); and
a heat recovery loop (270) along which a working fluid is movable, the heat recovery loop (270) positioned at least in part in a heat exchange relationship with the one or more electric components (222) of the turboelectric power system (220) such that the one or more electric components (222) impart thermal energy to the working fluid moving along the heat recovery loop (270), the heat recovery loop (270) also positioned at least in part in a heat exchange relationship with the fuel line (230) at the heat exchanger (260, 262, 264) such that the working fluid imparts thermal energy to the fuel moving along the fuel line (230).

2. The engine system (200) of claim 1, wherein the heat exchanger (260, 262, 264) is an upstream heat exchanger (260) positioned upstream of the fuel conditioning system (240) along the fuel line (230).

3. The engine system (200) of any preceding claim, wherein the heat exchanger (260, 262, 264) is a downstream heat exchanger (262) positioned downstream of the fuel conditioning system (240) along the fuel line (230).

4. The engine system (200) of any preceding claim, wherein the heat exchanger (260, 262, 264) is a downstream heat exchanger (262) positioned downstream of the fuel conditioning system (240) and the main fuel pump (254) along the fuel line (230).

5. The engine system (200) of any preceding claim, wherein the heat exchanger (260, 262, 264) is an upstream heat exchanger (260) positioned upstream of the fuel conditioning system (240) along the fuel line (230), and wherein the engine system (200) further comprises:
a downstream heat exchanger (262) positioned downstream of the fuel conditioning system (240) along the fuel line (230), and
wherein the heat recovery loop (270) is positioned at least in part in a heat exchange relationship with the fuel line (230) at the downstream heat exchanger (262) such that the working fluid imparts thermal energy to the fuel moved along the fuel line (230).

6. The engine system (200) of claim 5, wherein the downstream heat exchanger (262) is a first downstream heat exchanger (262) positioned between the fuel conditioning system (240) and the main fuel pump (254) along the fuel line (230), and wherein the engine system (200) further comprises:
a second downstream heat exchanger (264) positioned downstream of the fuel conditioning system (240) and the main fuel pump (254) along the fuel line (230), and
wherein the heat recovery loop (270) is positioned at least in part in a heat exchange relationship with the fuel line (230) at the second downstream heat exchanger (264) such that the working fluid imparts thermal energy to the fuel moved along the fuel line (230).

7. The engine system (200) of any preceding claim, wherein the fuel conditioning system (240) is a fuel deoxygenation system (240).

8. The engine system (200) of claim 7, wherein the fuel deoxygenation system (240) has one or more heaters (244) operable to impart thermal energy to the fuel moving along the fuel line (230), and wherein the one or more heaters (244) are provided electrical power generated by the one or more electric components (222) of the turboelectric power system (220).

9. The engine system (200) of claim 7 or 8, further comprising:
an electric motor (252) operatively coupled with the main fuel pump (254) and operable to drive the main fuel pump (254), the electric motor (252) being operable to receive electrical power from the turboelectric power system (220), and
wherein the fuel deoxygenation system (240) has one or more mechanical components requiring mechanical power (245), and wherein at least one of the one or more mechanical components (245) is operatively coupled with the electric motor (252).

10. The engine system (200) of any of claims 7 to 9, wherein the fuel deoxygenation system (240) has a fuel deoxygenation pump (246) operable to move the fuel through the fuel deoxygenation system (240) and a fuel deoxygenation motor (248) operatively coupled with the deoxygenation pump (246) and operable to drive the deoxygenation pump (246), and
wherein the at least one of the one or more electric components (222) operable to generate electrical power generates electrical power that is provided to the fuel deoxygenation motor (248).

11. The engine system (200) of any preceding claim, wherein the main fuel pump (254) is a variable speed fuel pump.

12. The engine system (200) of any preceding claim, wherein the one or more electric components (222) include an electric generator (224) operatively coupled with the gas turbine engine (210).

13. The engine system (200) of any preceding claim, further comprising:
an electric motor (252) operatively coupled with the main fuel pump (254) and operable to drive the main fuel pump (254), the electric motor (252) being operable to receive electrical power from the turboelectric power system (220), and
wherein the heat recovery loop (270) is positioned at least in part in a heat exchange relationship with the electric motor (252) such that the electric motor (252) imparts thermal energy to the working fluid moving along the heat recovery loop (270), and
wherein the working fluid heated by the heat generated by the electric motor (252) is directed through the heat exchanger (260) such that the working fluid heated by the electric motor (252) imparts thermal energy to the fuel moving along the fuel line (230) at the heat exchanger (260).

14. An engine system (200), comprising:
a turboelectric power system (220) having a gas turbine engine (210) and one or more electric components (222) including an electric generator operatively coupled with the gas turbine engine (210), the electric generator operable to generate electrical power;
a fuel line (230) for providing a fuel to the gas turbine engine (210);
a fuel deoxygenation system (240) positioned along the fuel line (230) and operable to reduce an amount of oxygen in the fuel, the fuel deoxygenation system (240) operable to receive electrical power from the turboelectric power system (220);
a main fuel pump (254) positioned downstream of the fuel deoxygenation system (240) along the fuel line (230) and operable to move the fuel along the fuel line (230);
a heat exchanger (260) positioned along the fuel line (230); and
a heat recovery loop (270) along which a working fluid is movable, the heat recovery loop (270) positioned at least in part in a heat exchange relationship with the one or more electric components (222) of the turboelectric power system (220) such that the one or more electric components (222) impart thermal energy to the working fluid moving along the heat recovery loop (270), the heat recovery loop (270) also positioned at least in part in a heat exchange relationship with the fuel line (230) at the heat exchanger (260) such that the working fluid imparts thermal energy to the fuel moving along the fuel line (230).

15. An engine system (200), comprising:
a turboelectric power system (220) having a gas turbine engine (210) and one or more electric components (222) including an electric generator (224) operatively coupled with the gas turbine engine (210), the electric generator (224) operable to generate electrical power;
a fuel line (230) for providing a fuel to the gas turbine engine (210);
a fuel deoxygenation system (240) positioned along the fuel line (230) and operable to reduce an amount of oxygen in the fuel, the fuel deoxygenation system (240) operable to receive electrical power from the turboelectric power system (220);
a main fuel pump (254) system having a main fuel pump (254) and an electric motor (252) operatively coupled with the main fuel pump (254) for driving the main fuel pump (254), the main fuel pump (254) being positioned downstream of the fuel deoxygenation system (240) along the fuel line (230), the electric motor (252) operable to receive electrical power from the turboelectric power system (220);
an upstream heat exchanger (260) positioned upstream of the fuel deoxygenation system (240) along the fuel line (230);
a downstream heat exchanger (262) positioned downstream of the fuel deoxygenation system (240) along the fuel line (230);
a first heat recovery loop (270) along which a first working fluid is movable, the first heat recovery loop (270) positioned at least in part in a heat exchange relationship with the one or more electric components (222) of the turboelectric power system (220) such that the one or more electric components (222) impart thermal energy to the first working fluid, the first heat recovery loop (270) also positioned at least in part in a heat exchange relationship with the fuel line (230) at the upstream heat exchanger (260) such that the first working fluid imparts thermal energy to the fuel moving along the fuel line (230); and
a second heat recovery loop (270) along which a second working fluid is movable, the second heat recovery loop (270) positioned at least in part in a heat exchange relationship with the electric motor (252) such that the electric motor (252) imparts thermal energy to the second working fluid, the second heat recovery loop (270) also positioned at least in part in a heat exchange relationship with the fuel line (230) at the downstream heat exchanger (260) such that the second working fluid imparts thermal energy to the fuel moving along the fuel line (230).
